# EUROPÄISCHE PATENTSCHRIFT

(11) **EP 1 259 404 B1**
(45) Veröffentlichungstag und Bekanntmachung des Hinweises auf die Patenterteilung: **27.02.2008**
(21) Anmeldenummer: 01915309.7
(22) Anmeldetag: 01.03.2001
(51) Int. Cl.: B60R 25/04, B60R 25/02

(54) **FAHRZEUGVERRIEGELUNGSVORRICHTUNG**
VEHICLE LOCKING DEVICE
DISPOSITIF DE VERROUILLAGE DE VEHICULE

(30) Priorität: 03.03.2000 DE 10010450
(43) Veröffentlichungstag der Anmeldung: 27.11.2002
(73) Patentinhaber: AUDI AG, 85045 Ingolstadt (DE)
(72) Erfinder: WARSCHAT, Ulf, 81929 München (DE); TITZE, Andreas, 38110 Braunschweig (DE); NEMETSCHEK, Dominique, 38110 Braunschweig (DE)
(74) Vertreter: Thielmann, Frank
(86) Internationale Anmeldenummer: PCT/EP2001/002295
(87) Internationale Veröffentlichungsnummer: WO 2001/064486

(56) Entgegenhaltungen:
- EP-A- 0 499 001
- EP-A- 0 733 522
- DE-A- 4 338 346
- US-A- 4 643 009
- US-A- 5 808 543

## Beschreibung

Die Erfindung betrifft eine Fahrzeugverriegelungsvorrichtung.

Fahrzeugverriegelungsvorrichtungen werden verwendet, um die Benutzung von Fahrzeugen durch unbefugte Personen zu verhindern. Als Fahrzeugverriegelungsvorrichtung sind beispielsweise Wegfahrsperren, die das Antriebsaggregat des Fahrzeugs stillsetzen, oder elektromechanische Zündschlösser bekannt.

DE 31 37 260 A1 beschreibt ein elektromechanisches Zündschloß für Kraftfahrzeuge. Dieses weist als Unterbrecherelement einer Sperriegel auf, welcher im eingerückten Zustand ein Drehen der Vorderräder verhindert. Der Sperriegel wird von einer elektronischen Steuerschaltung angesprochen, welche mit einem als Betätigungseinrichtung vorgesehenen Zündschloß verbunden ist. Wird von dem Zündschloß eine Freigabe detektiert, wird der Sperriegel in seine Freigabestellung bewegt und das Fahrzeug ist lenkbar. Wird von dem Zündschloß festgestellt, daß die Voraussetzungen für eine Freigabe nicht mehr vorliegen, was durch Herausziehen des Schlüssels erfolgt, wir der Sperriegel in seine Verriegelungsstellung verschoben. Um zu verhindern, daß unsichere Fahrzustände hervorgerufen werden, wird dabei zunächst überprüft, ob das Fahrzeug zum Stillstand gekommen ist. Ist dies nicht der Fall, bleibt das Herausziehen des Schlüssels wirkungslos, da die Steuereinrichtung in diesem Fall den Antrieb des Sperriegels nicht betätigt.

DE 197 48 326 C2 beschreibt eine Fahrzeugverriegelungsvorrichtung, bei der die Benutzung des Fahrzeugs durch Unbefugte dadurch verhindert wird, daß eine Kupplung in einem Lenkgestänge in einem in einen neutralen Zustand versetzt wird, im welchem eine Drehbewegung am Lenkrad nicht auf die Räder übertragen wird. Die als Unterbrecherelement vorgesehene Kupplung wird über eine Steuerschaltung angesprochen, welche mit einem Zündschloß verbunden ist. Die Kupplung soll dabei fehlersicher ausgelegt sein.

Eine weitere Fahrzeugverriegelungsvorrichtung ist aus DE 299 02 770 U1 bekannt. Als Unterbrecherelement ist eine Lenkspindelverriegelung vorgesehen, welche von einer Steuereinrichtung angesprochen wird. Um unsichere Fahrsituationen zu vermeiden ist vorgesehen, daß die Steuereinrichtung die Lenkspindelverriegelung nur aktivieren kann, wenn der Motor des Fahrzeugs abgestellt ist und ein zusätzliches Verriegelungssignal vorliegt.

DE 196 53 860 C1 beschreibt eine Fahrzeugverriegelungsvorrichtung, welche als Unterbrecherelement eine Lenkspindelverriegelung aufweist. Diese wird mittels eines Zündschlosses über eine Elektronik angesprochen. Um zu verhindern, daß durch eine elektronische Fehlsteuerung eine unsichere Fahrsituation entsteht, ist als Sicherheitseinrichtung ein am Zündschloß angreifender Bowdenzug vorgesehen.

Weitere Fahrzeugverriegelungsvorrichtungen sind in DE 33 06 863 C2, DE 33 18 415 C1, DE 44 22 436 C1, DE 44 34 655 A1, DE 44 42 789 A1, DE 195 39 851 C2, DE 195 39 852 C1, DE 196 38 556 C1, DE 197 33 249 A1, DE 197 33 448 A1, DE 197 52 519 A1, DE 198 09 295 C1 und EP 0 742 127 A2 beschrieben.

Darüber hinaus sind in DE 32 09 749 A1 und DE 196 21 950 C2 Start-Stop-Vorrichtungen für Antriebsmotore von Kraftfahrzeugen beschrieben.

Aus DE 43 38 346 A1 ist eine Vorrichtung zur selbsttätigen Unterbrechung der Fahrbereitschaft eines Kraftfahrzeuges bekannt. Bei dieser Vorrichtung soll die Sicherheit gegen Manipulationen von außen deutlich erhöht sein. Dazu sind zwei parallel geschaltete Steuermodule vorgesehen, wobei die Betriebsfähigkeit eines Steuermoduls für die Einsatzfähigkeit der Vorrichtung ausreicht.

Aus EP 0 499 001 A1 ist eine Vorrichtung für eine Lenkradverriegelung mit einer zentralen Steuereinheit bekannt. Die zentrale Steuereinheit empfängt, verarbeitet und sendet Signale. Insbesondere sendet die zentrale Steuereinheit Signale zur Aktivierung eines Motors, mit welchem die Lenkradverriegelung aktiviert wird. Von der Steuereinheit gesendete Signale zur Lenkradverriegelung können mittels einer Schaltung und einer Diode absorbiert werden, wenn eine bestimmte Geschwindigkeit überschritten ist.

Aus US 4 643 009 A ist ein Lenkradschloß mit Sensoren, insbesondere mit einem Motorsensor und einem Fahrtsensor bekannt, welche verhindern sollen, daß ein Unterbrecherelement aufgrund von Störungen oder Fehlbedingungen aktiviert wird und dadurch eine Gefahrensituation hervorrufen könnte.

Aus US 5 808 543 A und aus EP 0 733 522 A1 sind elektronische Wegfahrsperren bekannt, welche durch eine Zentraleinheit gesteuert sind. Die Zentraleinheit weist einen computergesteuerten Controller auf, der Signale empfängt, verarbeitet und ausgibt. Von der Steuereinheit ausgegebene Signale werden ohne weitere Prüfung an ein Unterbrecherelement ausgegeben, woraufhin die durch die Signale übermittelten Befehle, z.B. Verriegelung des Lenkrades, ausgeführt werden.

Die bekannten Vorrichtungen sind geeignet, die Benutzung von Fahrzeugen durch unbefugte Personen zu verhindern. Zum Teil wird auch schon eine hohe Sicherheit gegen Fehlfunktionen erreicht. Dennoch besteht bei den bekannten Vorrichtungen hinsichtlich von Fehlfunktionen noch ein Restrisiko.

Der Erfindung liegt die Aufgabe zugrunde eine Fahrzeugverriegelungsvorrichtung zur Verfügung zu stellen, bei der das Restrisiko für Fehlfunktionen weiter verringert ist, um die Gefahr unsicherer Fahrsituationen weiter zu verringern.

Die Lösung dieser Aufgabe erfolgt erfindungsgemäß mit den Merkmalen des Anspruch 1.

Gemäß der Erfindung ist bei einer Fahrzeugverriegelungsvorrichtung gemäß dem Oberbegriff des Anspruchs 1 vorgesehen, daß der Sicherheitspfad einen Schalter oder ein Relais aufweist, durch welche die Energie-, insbesondere Spannungsversorgung des Unterbrecherelementes im Verlauf oder nach Ende einer Motoraktivierungsphase unterbrochen wird, wobei der Schalter bzw. das Relais zur Unterbrechung der Energieversorgung des Unterbrecherelementes nach Ende der Motoraktivierungsphase in Abhängigkeit von einem den Betrieb des Motors nachweisenden Signal betätigt wird und erst nach Rücksetzung dieses Signales durch ein Stoppen des Motors wieder einschaltbar ist. Dadurch wird die Gefahr unsicherer Fahrsituationen verringert und es wird sichergestellt, dass ein Stromausfall nicht zu unsicheren Fahrsituationen führt.

Es wird somit ferner verhindert, daß Fehlfunktionen der Steuerschaltung, beispielsweise ein fehlerhaft arbeitender Prozessor oder eine falsche Grenzwertbewertung in dem Prozessor zu einer unbeabsichtigten Betätigung des Unterbrecherelementes führen können. Dadurch wird insbesondere die Gefahr unsicherer Fahrsituationen verringert.

Ferner ist durch die erfindungsgemäße Fahrzeugverriegelungsvorrichtung sichergestellt, daß ein Stromausfall nicht zu unsicheren Fahrsituationen führt, denn das Unterbrecherelement kann nicht aktiviert werden, wenn der Motor noch läuft.

Vorzugsweise sind die Steuerschaltung und der Sicherheitspfad mit einer gemeinsamen Betätigungsvorrichtung, beispielsweise einem Zündschloß oder einer Schalter oder Taster aufweisenden Start-Stop-Einrichtung betätigbar. Ein solche Ausgestaltung weist einen hohen Bedienungskomfort auf.

Wenn mit dem gemeinsamen Betätigungselement die Steuerschaltung und der Sicherheitspfad ausschließlich zeitversetzt betätigbar sind, vorzugsweise derart, daß ein Einschaltimpuls die Steuerschaltung aktiviert während ein späterer Ausschaltimpuls den Sicherheitspfad in eine aktive Stellung setzt, werden gleichzeitige Fehlfunktionen von Steuerschaltung und Sicherheitspfad praktisch ausgeschlossen. Eine Überwachungseinrichtung, die die Zustände von Steuerschaltung und Sicherheitspfad überwacht, kann zusätzlich vorgesehen sein, um zu bestimmten Zeiten unzulässige Betriebszustände anzuzeigen.

Eine hohe Sicherheit wird auch erreicht, wenn an dem gemeinsamen Betätigungselement separate Pfade für die Betätigung der Steuerschaltung und des Sicherheitspfades ausgebildet sind.

Um einen guten Schutz vor unbefugter Benutzung des Fahrzeugs zu gewährleisten, ist vorteilhaft, wenn das Unterbrecherelement eine Lenkradverriegelung, ein Schalter in der Stromversorgungsleitung der Kraftstoffanlage oder ein Schalter in der Stromversorgungsleitung der Zündanlage ist. Eine Kombination mehrerer Unterbrecherelemente ist möglich und kann im Hinblick auf hohe Sicherheit nur empfohlen werden.

Weitere Vorteilhafte Ausgestaltungen und Weiterbildungen der Erfindung ergeben sich aus den Unteransprüchen sowie aus der Beschreibung im Zusammenhang mit der Zeichnungen.

### Es zeigen:

- Fig. 1: eine als elektronische Lenkradverriegelung ausgeführte Fahrzeugverriegelung in schematischer Darstellung,
- Fig. 2: eine schematische Darstellung der Betriebszustände eines Motors sowie einer Spannungsversorgung bei ordnungsgemäßer Funktion und
- Fig. 3: eine schematische Darstellung der Betriebszustände des Motors und der Spannungsversorgung bei Fehlfunktionen.

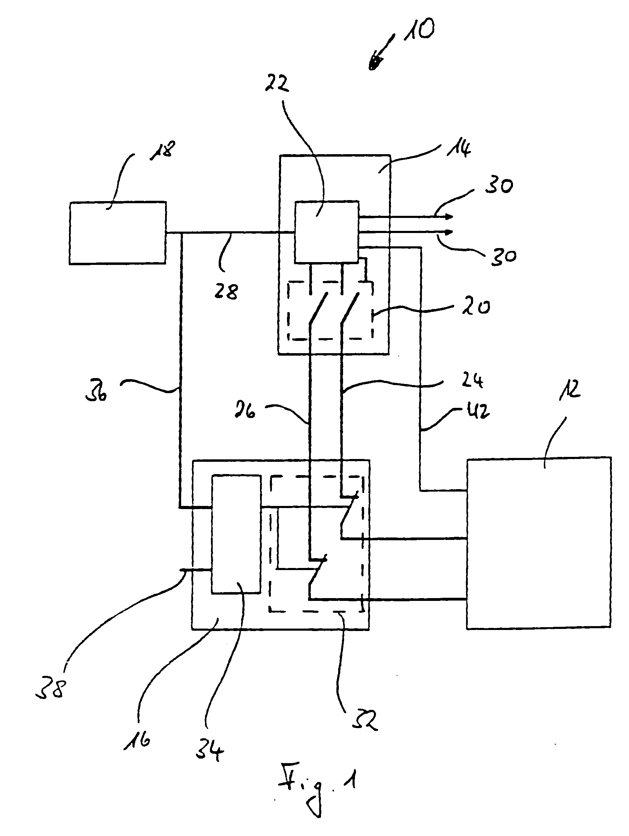

Die in Figur 1 gezeigte Lenkradverriegelung 10 weist ein elektromotorisch angetriebenes Unterbrecherelement 12 auf. Dieses wird über eine Steuerschaltung 14 unter Kontrolle eines Sicherheitspfades 16 mit elektrischer Spannung versorgt, wenn über ein Zündschloß 18 Betätigungssignale eingegeben werden.

In der Steuerschaltung 14 ist ein erster Schalter 20 vorgesehen, welcher von einem Prozessor 22 betätigt wird und eine Leitung 24 mit einer 12 V Spannungsquelle und eine Leitung 26 mit Masse verbindet. Der Prozessor 22 wird über eine erste Datenleitung 28 angesteuert und steuert seinerseits außer dem Schalter 20 über die Leitungen 30 die Zündung und den Anlasser.

Der Sicherheitspfad 16, der von der Steuerschaltung 14 unabhängige eigene Hardware aufweist, weist einen zweiten Schalter 32 auf, welcher je nach Betriebszustand die Leitungen 24 und 26 schließt oder unterbricht. Der Sicherheitspfad 16 weist einen zweiten Prozessor 34 oder eine Logik auf, welche Signale einer zweiten Datenleitung 36 und einer dritten Datenleitung 38 verarbeiten. Die dritte Datenleitung 38 überträgt vorzugsweise ein von dem Zustand der Leitung 30 der Zündung abgeleitetes Signal.

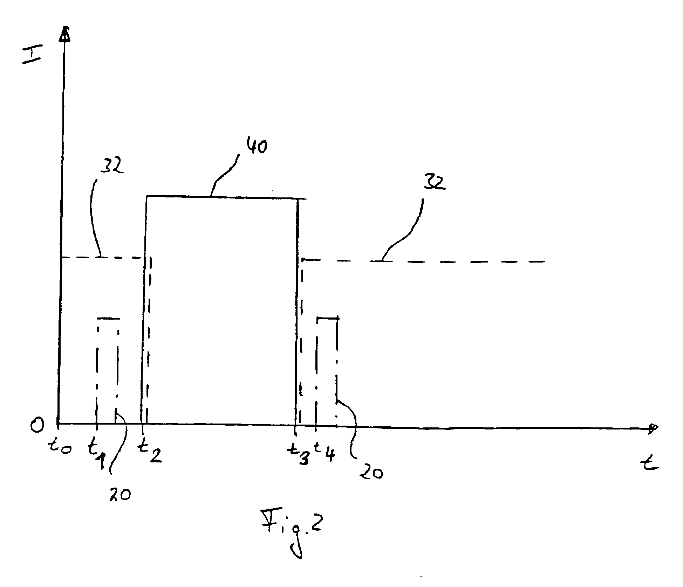

Vor einer Inbetriebnahme eines Kraftfahrzeuges im Zeitpunkt t₀ ist das Unterbrecherelement 12 in seiner eingerückten Position und blockiert die Drehbarkeit des Lenkrades. In diesem Zustand ist der Schalter 32 geschlossen, was in Figur 2 durch die unterbrochene Linie dargestellt wird.

Wird im Zeitpunkt t₁ der Zündschlüssel gedreht, geht über die Datenleitung 28 ein Signal an die Steuerschaltung 14, die daraufhin den Schalter 20, der in Figur 2 durch eine Strich-Punkt-Linie dargestellt ist, kurzzeitig schließt. Dadurch liegt an dem Unterbrecherelement 12 eine Spannung an, so daß Zustandsänderungen möglich sind. Ein am Zündschloß festgestelltes Entriegelungssignal kann dann von dem Unterbrecherelement 12, welches ohne Spannung in seinem jeweiligen Betriebszustand verbleibt, ausgeführt werden, wodurch das Lenkrad frei wird.

Wenn aufgrund der Betätigung des Anlassers der Motor, dessen Betriebszustand in Figur 2 durch die Linie 40 dargestellt ist, im Zeitpunkt t₂ läuft, liegt an der dritten Datenleitung 38 ein SET-Signal an, aufgrund dessen der Schalter 32 die Spannungsversorgung des Unterbrecherelementes 12 unterbricht.

Ein Wiedereinschalten des Schalters 32 ist nur möglich, wenn über die zweite Datenleitung 36 ein RESET-Signal, welches einen explizit geäußerten Benutzerwillen repräsentiert, gesendet wird.

Wird im Zeitpunkt t₃ der Motor durch Rückdrehen des Zündschlüssels ausgeschaltet, wird gleichzeitig das RESET-Signal gesendet und der Schalter 32 geschlossen. Wenn dann über die ersten Datenleitung 28 ein Verriegelungssignal an die Steuerschaltung 14 gesendet wird, schließt diese im Zeitpunkt t₄ den Schalter 20. Dadurch liegt an dem Unterbrecherelement wiederum ein Spannung an und ein über eine vierte Datenleitung 42 gesendetes Verriegelungssignal kann ausgeführt werden und das Lenkrad verriegeln.

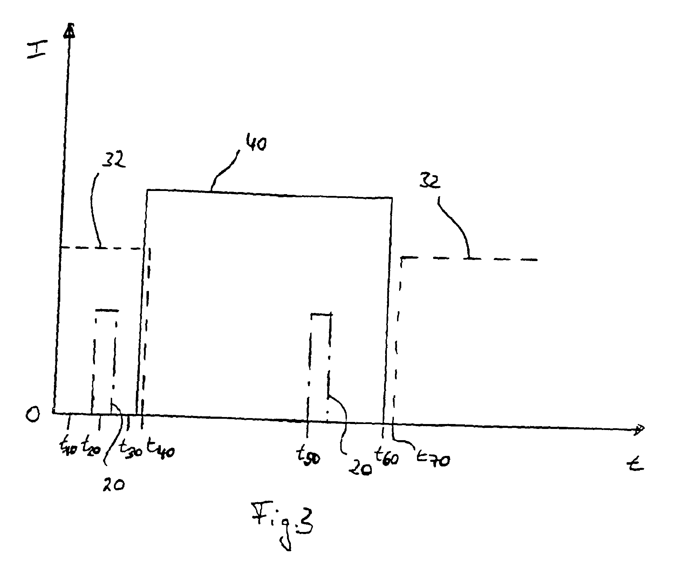

Fig. 3 zeigt ein Fehlerszenario, bei dem in der Steuerschaltung 14 eine Fehlfunktion vorliegt. Fehlfunktion bedeutet in dem gezeigten Fehlerszenario, daß die Steuerschaltung 14, den Schalter 20 schließt und über die vierte Datenleitung 42 ein Verriegelungssignal sendet, obwohl das Fahrzeug fährt, wobei der Motor 40 läuft. Das Schließen des Schalters 20 und das Senden des Verriegelssignals bleiben jedoch wirkungslos, da der Schalter 32 des Sicherheitspfades nicht geschlossen ist.

Im Einzelnen sind in Fig. 3 folgende Zeitpunkte gezeigt:
- T ₁₀: Signal des Fahrzeugnutzers zur Aktivierung der Zündung.
- T ₂₀: Deaktivierung des Unterbrecherelements.
- P ₃₀: Tatsächliche Aktivierung der Zündung durch die Steuerschaltung 14 und Auslösung des "Set-Signals" auf der dritten Datenleitung 38.
- T 40: Unterbrechung der Energieversorgung des Unterbrecherelements durch den Schalter 32.

Die Zeit zwischen den Zeitpunkten T ₃₀ und T ₄₀ ist die Reaktonszeit des Systems. Der Zeitraum ist sehr kurz, wobei es nicht darauf ankommt, ob der Motor 40 innerhalb dieses Zeitraums bereits auf Betriebsdrehzahl hochgefahren ist oder erst kurz danach. Wichtig ist, daß das Ereignis T ₄₀ eintritt bevor das Fahrzeug in Bewegung gesetzt werden konnte. Bis zum Zeitpunkt T ₄₀ ist die Funktion der Fahrzeugverriegelung gemäß Fig. 3 fehlerfrei.
- T 50: repräsentiert eine Fehlfunktion, bei der die Steuerschaltung die Voraussetzungen für eine Aktivierung des Unterbrecherelements 12 zu schaffen versucht. Da der Motor 40 noch läuft, könnte eine Aktivierung des Unterbrecherelements 12, insbesondere wenn der Lenkstrang oder die Bremsfunktionen betroffen sind, zu einer unsicheren Fahrsituation führen. Da jedoch der Schalter 32 geöffnet ist, ist eine Aktivierung des Unterbrecherelements 12 nicht möglich.
- T₆₀: Erst wenn in diesem Zeitpunkt durch die tatsächliche Stillsetzung des Motors das auf der dritten Datenleitung 38 vorliegende Set-Signal weggefallen ist und wenn zusätzlich durch einen auf der zweiten Datenleitung 36 gesendetes Reset-Signal im Zeitpunkt T ₇₀ der Schalter 32 geschlossen worden ist, ist eine Aktivierung des Unterbrecherelements 12 möglich.

## Patentansprüche

1. Fahrzeugverriegelungsvorrichtung mit einem Unterbrecherelement (12) zur Stillsetzung eines Fahrzeugs, einer das Unterbrecherelement (12) ansteuernden Steuerschaltung (14) und einer Betätigungseinrichtung (18), wobei der Funktionszustand des Unterbrecherelementes (12) mittels der Betätigungseinrichtung (18) veränderbar ist, wobei ein von der Steuerschaltung (14) unabhängiger Sicherheitspfad (16) vorgesehen ist, wobei der Funktionszustand des Unterbrecherelementes (12) nur bei anliegender Energieversorgung veränderbar ist und wobei der Sicherheitspfad (16) einen Schalter (32) oder ein Relais aufweist,
**dadurch gekennzeichnet,**
**daß** die Energieversorgung des Unterbrecherelementes (12) durch den Schalter bzw. das Relais im Verlauf oder nach dem Ende einer Motoraktivierungsphase unterbrochen wird, wobei der Schalter (32) bzw. das Relais zur Unterbrechung der Energieversorgung des Unterbrecherelementes (12) nach Ende der Motoraktivierungsphase in Abhängigkeit von einem den Betrieb des Motors nachweisenden Signal betätigt wird und erst nach Rücksetzung dieses Signales durch ein Stoppen des Motors wieder einschaltbar ist.

2. Fahrzeugverriegelungsvorrichtung nach Anspruch 1, **dadurch gekennzeichnet, daß** die Steuerschaltung (14) und der Sicherheitspfad (16) mit einer gemeinsamen Betätigungsvorrichtung (18) betätigbar sind.

3. Fahrzeugverriegelungsvorrichtung nach Anspruch 2, **dadurch gekennzeichnet, daß** mit dem gemeinsamen Betätigungselement (18) die Steuerschaltung (14) und der Sicherheitspfad (16) ausschließlich zeitversetzt betätigbar sind.

4. Fahrzeugverriegelungsvorrichtung nach Anspruch 2, **dadurch gekennzeichnet, daß** an dem gemeinsamen Betätigungselement (18) separate Pfade für die Betätigung der Steuerschaltung (14) und des Sicherheitspfades (16) ausgebildet sind.

5. Fahrzeugverriegelungsvorrichtung nach einem der Ansprüche 1 bis 4, **dadurch gekennzeichnet, daß** die Spannungsversorgung des Unterbrecherelementes (12) von der Steuerschaltung (14) nur zu bestimmten Zeiten freigeschaltet wird.

6. Fahrzeugverriegelungsvorrichtung nach einem der Ansprüche 1 bis 5, **dadurch gekennzeichnet, daß** das Unterbrecherelement (12) eine Lenkradverriegelung ist.

7. Fahrzeugverriegelungsvorrichtung nach einem der Ansprüche 1 bis 5, **dadurch gekennzeichnet, daß** das Unterbrecherelement ein Schalter in der Stromversorgungsleitung der Kraftstoffanlage ist.

8. Fahrzeugverriegelungsvorrichtung nach einem der Ansprüche 1 bis 5, **dadurch gekennzeichnet, daß** das Unterbrecherelement ein Schalter in der Stromversorgungsleitung der Zündanlage ist.

## Claims

1. Vehicle locking apparatus with a cut-out element (12) for immobilizing a vehicle, a control circuit (14) triggering the cut-out element (12) and an actuating device (18), wherein the functional state of the cut-out element (12) is changeable by means of the actuating device (18), wherein a safety path (16) independent of the control circuit (14) is provided, and wherein the functional state of the cut-out element (12) is changeable only when a power supply is on, and wherein the safety path (16) comprises a switch (32) or a relay,
**characterized in that**
the power supply to the cut-out element (12) is interrupted by the switch or relay in the course of, or at the end of, an engine activation phase, the switch (32) or relay for interrupting the power supply to the cut-out element (12) being actuated at the end of the engine activation phase in response to a signal indicating that the engine is running, and not being switchable again until this signal has been reset by the stopping of the engine.

2. Vehicle locking apparatus according to Claim 1, **characterized in that** the control circuit (14) and the safety path (16) can be activated by a common actuating apparatus (18).

3. Vehicle locking apparatus according to Claim 2, **characterized in that** the control circuit (14) and the safety path (16) can only be operated by the common actuating element (18) with a time offset.

4. Vehicle locking apparatus according to Claim 2, **characterized in that** separate paths are configured on the common actuating element (18) for actuation of the control circuit (14) and of the safety path (16).

5. Vehicle locking apparatus according to any one of Claims 1 to 4, **characterized in that** the power supply to the cut-out element (12) is only enabled by the control circuit (14) at specific times.

6. Vehicle locking apparatus according to any one of Claims 1 to 5, **characterized in that** the cut-out element (12) is a steering-wheel lock.

7. Vehicle locking apparatus according to any one of Claims 1 to 5, **characterized in that** the cut-out element is a switch in the power supply lead to the fuel system.

8. Vehicle locking apparatus according to any one of Claims 1 to 5, **characterized in that** the cut-out element is a switch in the power supply lead to the ignition system.

## Revendications

1. Dispositif de verrouillage de véhicule comprenant un élément interrupteur (12) destiné à arrêter un véhicule, un circuit de commande (14) pilotant l'élément interrupteur (12) et un système d'actionnement (18), l'état de fonctionnement de l'élément interrupteur (12) pouvant être modifié au moyen du système d'actionnement (18), un trajet de sécurité (16) indépendant du circuit de commande (14) étant prévu, l'état de fonctionnement de l'élément interrupteur (12) ne pouvant être modifié qu'en présence d'une alimentation en énergie et le trajet de sécurité (16) comprenant un commutateur (32) ou un relais,
**caractérisé en ce que**
l'alimentation en énergie de l'élément interrupteur (12) est interrompue par le commutateur et/ou le relais au cours ou à la fin d'une phase d'activation du moteur, le commutateur (32) et/ou le relais destinés à interrompre l'alimentation en énergie de l'élément interrupteur (12) étant activés à la fin de la phase d'activation du moteur en fonction d'un signal détectant le fonctionnement du moteur et ce n'est qu'après la réinitialisation de ce signal par un arrêt du moteur qu'ils peuvent être à nouveau mis en marche.

2. Dispositif de verrouillage de véhicule selon la revendication 1, **caractérisé en ce que** le circuit de commande (14) et le trajet de sécurité (16) peuvent être actionnés avec un dispositif d'actionnement (18) commun .

3. Dispositif de verrouillage de véhicule selon la revendication 2, **caractérisé en ce que** le circuit de commande (14) et le trajet de sécurité (16) peuvent être actionnés exclusivement avec un décalage dans le temps par l'élément d'actionnement commun (18).

4. Dispositif de verrouillage de véhicule selon la revendication 2, **caractérisé en ce que** des trajets séparés pour l'actionnement du circuit de commande (14) et du trajet de sécurité (16) sont conçus sur l'élément d'actionnement commun (18).

5. Dispositif de verrouillage de véhicule selon l'une quelconque des revendications 1 à 4, **caractérisé en ce que** l'alimentation en tension de l'élément interrupteur (12) n'est mise hors tension par le circuit de commande (14) qu'à certains moments.

6. Dispositif de verrouillage de véhicule selon l'une quelconque des revendications 1 à 5, **caractérisé en ce que** l'élément interrupteur (12) est un verrouillage du volant.

7. Dispositif de verrouillage de véhicule selon l'une quelconque des revendications 1 à 5, **caractérisé en ce que** l'élément interrupteur est un commutateur dans la conduite d'alimentation en courant du système de carburant.

8. Dispositif de verrouillage de véhicule selon l'une quelconque des revendications 1 à 5, **caractérisé en ce que** l'élément interrupteur est un commutateur dans la conduite d'alimentation en courant du système d'allumage.
